# EUROPEAN PATENT APPLICATION

(11) **EP 2 527 140 A1**
(43) Date of publication of application: **28.11.2012**
(21) Application number: 11167934.6
(22) Date of filing: 27.05.2011
(51) Int. Cl.: B32B 15/01, C22C 21/00

(54) **Formable clad sheet article**

(71) Applicant: Aleris Aluminum Duffel BVBA, 2570 Duffel (BE)
(72) Inventor: Lahaije, Christiaan Theodorus Wilhelmus, 1705 KW Heerhugowaard (NL); Chezan, Anton Romulus, 1911 PC Uitgeest (NL)
(74) Representative: Müller Schupfner & Partner

(57) **Abstract**

This invention relates to a clad sheet article comprising an aluminium alloy core having opposed first and second surfaces, an aluminium alloy cladding layer at said first surface of the core alloy and having an opposed inner-surface and an outer-surface and wherein the inner-surface is facing the first surface of the core alloy, and optionally a cladding layer at said second surface, and wherein said first surface of the core alloy has a surface roughness average Ra value of 0.25 microns or less.

## Description

### FIELD OF THE INVENTION

The invention relates to a clad sheet article with improved formability characteristics and the clad sheet article comprising an aluminium alloy core having opposed first and second surfaces, an aluminium alloy cladding layer at said first surface of the core alloy and having an opposed inner-surface and an outer-surface and wherein the inner-surface is facing the first surface of the core alloy, and optionally a cladding layer at said second surface. The clad sheet article is preferably used to produce body panels for the transportation industry.

### BACKGROUND TO THE INVENTION

As will be appreciated herein below, except as otherwise indicated, aluminium alloy designations and temper designations refer to the Aluminium Association designations in Aluminium Standards and Data and the Registration Records, as published by the Aluminium Association in 2011 and are well known to the person skilled in the art.

For any description of alloy compositions or preferred alloy compositions, all references to percentages are by weight percent unless otherwise indicated. The term "up to" and "up to about", as employed herein, explicitly includes, but is not limited to, the possibility of zero weight-percent of the particular alloying component to which it refers. For example, up to about 0.2% Ti may include an alloy having no Ti.

It is conventional practice in the transportation industry to form body panels, such as bonnets, deck lids and fenders, by stamping sheet material. Typically, the transportation industry has utilised steel sheet or aluminium alloy sheet for the production of body panels. To date aluminium alloy panels for use in vehicles (also referred to as Automotive Body Sheet or ABS) are mainly made from a single aluminium alloy or a uni-alloy (and thus define what is referred to as non-clad or non-composite systems). Generally, aluminium alloys from the AA5xxx-series are used for inner panel applications, whereas aluminium alloys from the AA6xxx-series are used for outer panel and structural applications. Although by varying the chemical composition of the aluminium alloys a wide variation of mechanical properties can be achieved, not all possibilities are applied in practice. For applications in vehicles these possibilities are limited, amongst others, due to restrictions imposed by corrosion performance, surface appearance or by formability. For example, an increase of the Mg-level in AA5xxx-series aluminium alloys commonly enhances the formability as well as strength, but at the same time the corrosion performance (in particular the so-called intergranular corrosion resistance) is worsened. Also there can be an undesirable occurrence of stretch marker lines. Likewise, in AA6xxx-series aluminium alloys, for example a significant increase of the Cu-level would adversely lead to an increased corrosion sensitivity (in particular the so-called filiform corrosion) for painted surfaces, which has restricted usage of these compositions in automotive body sheet applications (inner panel, outer panel and structural applications).

To improve the balance between strength and corrosion resistance it is proposed in the art to use clad sheet products whereby an aluminium core alloy is combined with a thin layer aluminium alloy cladding to enhance a certain engineering property such as the hemming performance, which is predominantly determined by the outer surface conditions. However, whereas the application of a cladding layer may enhance the corrosion resistance of the clad sheet product, it has been found that the overall formability may not always be improved.

### DESCRIPTION OF THE INVENTION

It is an object of the invention to provide a clad sheet article having enhanced formability.

This and other objects and further advantages are met or exceeded by the present invention and providing a clad sheet article comprising an aluminium alloy core having opposed first and second surfaces, an aluminium alloy cladding layer at said first surface of the core alloy and having an opposed inner-surface and an outer-surface and wherein the inner-surface is facing the first surface of the core alloy, and optionally a cladding layer at said second surface, and wherein said first surface of the core alloy has a surface roughness average Ra value of 0.25 microns or less, and preferably of 0.2 microns or less.

In a preferred embodiment the said first surface of the core alloy has a maximum count RPc of 10 counts per cm, and more preferably of maximum 8 counts per cm.

In a preferred embodiment of the clad sheet article the opposed outer-surface of the cladding layer at said first surface of said opposed surfaces is provided with random depressions substantially over an entire area of said outer-surface of the cladding layer and wherein the surface roughness average Ra value of said depressions is maximum 1.5 microns, preferably 1.3 microns, and more preferably maximum 1.1 microns. The peak count RPc of said depressions is at least 50 counts per cm, and preferably at least 60 counts per cm.

For the purpose of this invention each of the roughness average Ra value and the maximimum peak count RPc have been measured in accordance with European standard EN-10049 for metallic flat products. Most commonly these properties are being measured on the flat product perpendicular to the rolling direction.

In accordance with the invention a clad sheet article is provided that offers an enhanced formability characteristics as reflected in a FLD diagram compared to uni-alloy sheet articles and also compared to clad sheet articles, whereas it combines the desirable favourable characteristics of the core alloy sheet with those of the clad material. In regular forming operations like deep drawing or stamping the sequence of failure is plastic deformation localization (necking) and than cracking at the weakest point. The necking is affected by material inhomogeneities or defects. An important type of such irregularities is given by the initial surface roughness of the sheet article. The skilled person could assume that reducing the surface roughness by prior polishing or polishing after a certain degree of deformation significantly postpones the onset of deformation localization and failure. However, in practice, also some level of friction is required for a successful forming operation. The low friction is obtained by a careful balance of metal sheet initial roughness, type and quantity of lubricant, and to a lesser extent also the tool design. But a very smooth metal sheet surface will result in a rather high friction coefficient and consequently the advantage of postponing the deformation localization cannot be fully utilised by polishing of the outer-surface of the sheet article in regular industrial applications. Thus for a uni-alloy metal sheet article there is in practice a balance between on the one hand a smooth surface to postpone necking and on the other hand to have a relatively high surface roughness to improve the friction behaviour during a forming operation. In accordance with the invention it has been found that in a clad sheet article as herein disclosed the use of a cladding layer removes these opposing effects of surface roughness so that both conditions can be optimized independently from each other. If the performance of the cladding layer is selected such that in a forming operation it follows the core layer such that the cladding layer is less necking sensitive than the core layer than the failure mechanism of the clad sheet article will be dominated by the core layer. Then the cracking initiation will be postponed by the relatively smooth first surface of the core layer and resulting in an enhanced formability performance. Because the opposed outer-surface of the cladding layer that will be in contact with the forming tool is now independent from the first surface of the core layer it can be optimized also to have a high surface roughness and peak count for optimal lubrication and having optimised forming characteristics as well.

In an embodiment the aluminium core alloy is made of an aluminium alloy selected from the group consisting of AA5xxx, AA6xxx and AA7xxx-series alloys.

In an embodiment the aluminium alloy cladding layer at said first surface of the core alloy is made of an aluminium alloy that follows the core alloy in a forming operation and is selected from the group consisting of AA3xxx, AA5xxx, and AA6xxx-series alloys.

From the AA3xxx-series in particular an alloy selected from AA3003, AA3004, AA3104, AA3005, are being applied, and which may additionally further contain about 1.0 to 2.0% Fe and optionally up to 1 % Si.

For example a 6xxx-series core alloy from the AA6016, AA6451, AA6111 or AA6014-series can be clad on one or both sides with a low-alloyed 6xxx-series alloy or with a low-alloyed 5xxx-series alloy having Mg as its main constituent at a level of 3% or less to improve on the intergranular corrosion resistance.

In another example a 5xxx-series alloy having a high Mg content can be clad on one or both sides with a low-alloyed 6xxx-series alloy or with a low-alloyed 5xxx-series alloy having Mg as its main constituent at a level of 3% or less.

In an embodiment of the clad sheet article a cladding layer is provided at said second surface of said opposed surfaces, said cladding layer on said second opposed surface being made from the same aluminium alloy as the alloy on the first opposed surface such as a symmetrical product is being obtained. In an alternative variant the cladding layer at said second surface is made from a different aluminium alloy to tailor other engineering properties.

In another embodiment of the clad sheet article the second surface of said opposed surfaces is formed by the aluminium core alloy devoid of any metallic layer.

Although the dimensions of the sheet article can be varied in many ways, however, for the preferred use in automotive body panels in accordance with this invention, it is made from an article having a total thickness (viz. the core and all clad layer taken together) in the range of about 0.5 mm to about 4 mm, preferably about 0.5 mm to about 3.5 mm, and more preferably of 0.7 mm to 1.5 mm. The cladding layer or cladding layers are usually much thinner than the core sheet, and preferably each constituting 2% to about 25% of the total clad sheet article thickness, and more preferably each constituting 2% to about 15% of the total clad sheet article thickness.

Outer surface coatings of lubricants are applied to each of the outer surface of the aluminium alloy cladding layer. The coatings may comprise a dry lube or an oil. The dry lube protects the surface of the cladding layer during handling and is there to control the friction during for example deep drawing or stretch forming and assembly operations. The dry lube is then removed after the forming processes. For example the dry lube may comprise an environmentally friendly polymer which is water soluble and, in turn, rapidly removable prior to painting. The weight of the dry lube is approximately up to 2.0 g/m², and preferably up to about 1 g/m². Of course, other coatings which provide control of the friction to the cladding layer surface during the forming operation are likewise contemplated for use.

In the embodiment where the clad sheet article is used for manufacturing formed autobody parts, the outer-surface of the aluminium alloy cladding layer is provided with a texturing to provide the desired surface roughness and peak count in accordance with an embodiment of this invention. Textured sheets are produced by imparting to one or both outer-surfaces of the sheet stock a pattern of surface features. This is to reduce and control frictional forces and/or to provide adequate lubrication between the sheet article surface and tooling used during forming operations such as stamping, stretching, deep drawing, pressing, press forming, and roll forming, at cryogenic or at ambient or at elevated temperature. Patterns of surface features can be imparted in the sheet stock by creating a selected textured roll surface on one or more rolls of a cold rolling mill employed to reduce the sheet stock to final thickness. Various techniques including shot blast (SBT), energy beam (such as laser or electron beam) such as EBT, or lasertex (LT), or electro-discharge (EDT), or pretext, and ECT, have been used to create the selected textured roll surface. When producing on industrial scale sheet stock for automotive parts electro-discharge texturing (EDT) is being preferred.

In another aspect of the invention it relates to the use of a clad sheet article of the present disclosure for the manufacture of automotive panels and which may include a panel selected from the group consisting of door inner panels, door outer panels, side panels, inner hoods, outer hoods, fenders, roofs, and trunk lid panels. Also clad articles for structural applications for body-in-white can be made in accordance with the invention. Furthermore, chassis parts and suspension parts can be made therefrom.

In another aspect of the invention it relates to a motor vehicle incorporating a formed aluminium alloy body panel in accordance with this invention. In particular it relates to non-lead bearing or non-structural closures selected from the group consisting of door inner panels, door outer panels, side panels, inner hoods, outer hoods, and trunk lid panels.

In another aspect of the invention is relates to a method of manufacturing a formed metal panel, in particular into a automotive panel, incorporating a clad sheet article as herein disclosed and defined.

While various embodiments of the technology described herein have been described in detail, it is apparent that modifications and adaptations of those embodiments will occur to those skilled in the art. However, it is to be expressly understood that such modifications and adaptations are within the spirit and scope of the presently disclosed technology.

## Claims

1. A clad sheet article comprising an aluminium alloy core having opposed first and second surfaces, an aluminium alloy cladding layer at said first surface of the core alloy and having an opposed inner-surface and an outer-surface and wherein the inner-surface is facing the first surface of the core alloy, and optionally a cladding layer at said second surface, and wherein said first surface of the core alloy has a surface roughness average Ra value of 0.25 microns or less.

2. A clad sheet article according to claim 1, wherein said first surface of the core alloy has a maximum count RPc of 10 counts per cm.

3. A clad sheet article according to claims 1 or 2, wherein the opposed outer-surface of the cladding layer at said first surface of said opposed surfaces is provided with random depressions substantially over an entire area of said outer-surface of the cladding layer and wherein the surface roughness average Ra value of said depressions is maximum 1.5 micron and the peak count RPc of said depressions is at least 50 counts per cm, and preferably at least 60 counts per cm.

4. A clad sheet article according to any one of claims 1 to 3, wherein the aluminium core alloy is made of an aluminium alloy selected from the group consisting of AA5xxx, AA6xxx and AA7xxx-series alloys.

5. A clad sheet article according to any one of claims 1 to 4, wherein the aluminium alloy cladding layer at said first surface of the core alloy is made of an aluminium alloy that follows the core alloy in a forming operation and is selected from the group consisting of AA3xxx, AA5xxx and AA6xxx-series alloys.

6. A clad sheet article according to any one of claims 1 to 5, wherein a lubricant composition is provided on the opposed outer-surface of the cladding layer at said first surface of said opposed surfaces.

7. A clad sheet article according to any one of claims 1 to 6, wherein the opposed outer-surface of the cladding layer at said first surface of said opposed surfaces has a textured surface roughness average applied by means of one selected from EDT, EBT, pretext, ECT, lasertex LT, shotblast SBT.

8. A clad sheet article according to any one of claims 1 to 7, wherein a cladding layer is provided at said second surface of said opposed surfaces, said cladding layer on said second opposed surface being made from the same aluminium alloy at said first surface of said opposed surfaces.

9. A clad sheet article according to any one of claims 1 to 7, wherein the second surface of said opposed surfaces is formed by the aluminium core alloy devoid of any metallic layer.

10. A clad sheet article according to any one of claims 1 to 11, wherein the sheet article is an automotive clad sheet product.

11. A clad sheet article according to any one of claims 1 to 10, wherein said cladding at said first surface has a thickness of at least 2% and not more than 25%, and preferably not more than 15%, of the total thickness of said sheet article.

12. A clad sheet article according to any one of claims 1 to 11, wherein said cladding at said second surface has a thickness of at least 2% and not more than 25%, and preferably of not more than 15%, of the total thickness of said sheet article.

13. A clad sheet article according to any one of claims 1 to 12, having a gauge in the range of 0.4 mm to 4 mm, and preferably of 0.7 mm to 1.5 mm.
